# EUROPEAN PATENT APPLICATION

(11) **EP 4 633 063 A1**
(43) Date of publication of application: **15.10.2025**
(21) Application number: 24759478.1
(22) Date of filing: 25.01.2024
(51) Int. Cl.: H04B 10/564

(54) **OPTICAL TRANSMISSION DEVICE AND RELATED NETWORK**

(30) Priority: 24.02.2023 CN 202310212313
(71) Applicant: Huawei Technologies Co., Ltd., Shenzhen, Guangdong 518129 (CN)
(72) Inventor: LUO, Jun, Shenzhen, Guangdong 518129 (CN); FAN, Kun, Shenzhen, Guangdong 518129 (CN); ZHONG, Jian, Shenzhen, Guangdong 518129 (CN)
(74) Representative: Körber, Martin Hans
(86) International application number: PCT/CN2024/073942
(87) International publication number: WO 2024/174800

(57) **Abstract**

Embodiments of this application disclose an optical transmission device, to stabilize optical power of a signal and reduce damage to the signal. A first optical transmission device provided in embodiments of this application includes: a first power locking module, configured to receive a first input signal from a second optical transmission device through a first optical fiber, and output a first output signal; a second power locking module, configured to receive a second input signal from the second optical transmission device through a second optical fiber, and output a second output signal; and a first optical switch, configured to select the first output signal to be connected to a downstream port of the first optical transmission device. If a fault occurs in a communication link on which the first optical fiber is located, the first optical switch switches a signal connected to the downstream port from the first output signal to the second output signal, and controls, during the switching, a variation of optical power at the downstream port to be within a target threshold.

## Description

This application claims priority to Chinese Patent Application No. CN202310212313.2, filed with the China National Intellectual Property Administration on February 24, 2023 and entitled "OPTICAL TRANSMISSION DEVICE AND RELATED NETWORK", which is incorporated herein by reference in its entirety.

### TECHNICAL FIELD

Embodiments of this application relate to the communication field, and in particular, to an optical transmission device and a related network.

### BACKGROUND

In an optical communication network, a dual-fed line is usually used to protect a communication link. The dual-fed line includes a signal source, two optical fibers, and an optical switch. Signals sent by the signal source are transmitted to the optical switch through the two optical fibers respectively, and the optical switch is connected to one of the two optical fibers, to implement signal transmission from the signal source to the optical switch.

When a signal cannot be normally transmitted to the optical switch because a fault occurs in an optical fiber link connected to the optical switch, the optical switch may switch the connected optical fiber, and receive the signal from an upstream optical transmission device through the other optical fiber.

If the optical switch switches from one optical fiber to the other optical fiber for connection, optical power may fluctuate. Due to a stimulated Raman scattering effect, fluctuation of optical power of the signal at the upstream optical transmission device causes fluctuation of optical power of the signal at a downstream optical transmission device. As a result, crosstalk occurs in the signal at the downstream optical transmission device, and communication quality is affected.

### SUMMARY

Embodiments of this application provide an optical transmission device and a related network, to stabilize optical power of a signal and reduce damage to the signal.

According to a first aspect, an embodiment of this application provides an optical transmission device, where the optical transmission device is a first optical transmission device. The first optical transmission device includes: a first power locking module, configured to receive a first input signal from a second optical transmission device through a first optical fiber, and output a first output signal; a second power locking module, configured to receive a second input signal from the second optical transmission device through a second optical fiber, and output a second output signal; and a first optical switch, configured to select the first output signal to be connected to a downstream port of the first optical transmission device. If a fault occurs in a communication link on which the first optical fiber is located, the first optical switch switches a signal connected to the downstream port from the first output signal to the second output signal, and controls, during the switching, a variation of optical power at the downstream port to be within a target threshold.

According to the first optical transmission device provided in this embodiment of this application, stability of optical power of an output signal of the first optical transmission device can be maintained during the switching. In this case, for a downstream optical transmission device, power fading does not occur in optical power of a pass-through signal from the first optical transmission device, and a Raman effect does not affect a variation of optical power of a wavelength-adding signal at the downstream optical transmission device. The optical power of the pass-through signal and optical power of the wavelength-adding signal are stable, and damage to the signals is reduced or even eliminated.

In an optional implementation, the first optical switch includes a first multiplexer, where the first multiplexer includes an output port and a plurality of input ports. A quantity n of the plurality of input ports is greater than or equal to 2, and each input port in the plurality of input ports may be connected to one power locking module. Two input ports in the plurality of input ports are respectively connected to the first power locking module and the second power locking module, and the output port is connected to the downstream port. The first multiplexer is configured to adjust split ratios of the two input ports during the switching, to enable the variation of the optical power at the downstream port to be less than or equal to the target threshold.

In this embodiment of this application, split ratios of the plurality of input ports of the first multiplexer are adjusted to control a power value of an optical signal output to the downstream port, to enable the variation of the optical power at the downstream port to be within the target threshold. Because split ratio adjustment of the multiplexer is simple and efficiency of adjusting and controlling the optical power is high, the optical power at the downstream port can be efficiently adjusted.

In an optional implementation, the first optical switch includes: a first optical attenuator, connected to the first power locking module and a second multiplexer, and configured to transmit the first output signal to the second multiplexer; and a second optical attenuator, connected to the second power locking module and the second multiplexer, and configured to transmit the second output signal to the second multiplexer, where input ports of the second multiplexer are connected to the first optical attenuator and the second optical attenuator, and an output port is connected to the downstream port, and is configured to transmit the first output signal and the second output signal to the downstream port. As the switching is performed, an attenuation value of the first optical attenuator gradually increases, and an attenuation value of the second optical attenuator gradually decreases.

In this embodiment of this application, the optical attenuator is used to adjust optical power values of the optical signals on the two links, to control the variation of the optical power at the downstream port to be within the target threshold. Because the optical attenuator controls the optical power in a fine manner, the optical power at the downstream port can be precisely controlled, so that the optical power at the downstream port is more stable, and damage to the signal is reduced.

In an optional implementation, the first power locking module is configured to change an optical power value of a signal passing through the first power locking module, to enable an optical power variation of the first output signal to be less than or equal to a first threshold.

In an optional implementation, the first power locking module further includes a first dummy light source and a third multiplexer, where the third multiplexer is configured to multiplex a signal from the first dummy light source and the first input signal to obtain the first output signal. If optical power of the first input signal increases, optical power of the first dummy light source decreases; or if optical power of the first input signal decreases, the optical power of the first dummy light source increases.

In this embodiment of this application, a first dummy light source whose optical power changes reversely with the first input signal is used to compensate for fluctuation of the optical power of the first input signal, so that optical power of the first output signal is stable. Because a structure and a connection relationship of the first dummy light source are simple, a structure of the entire optical transmission device is simpler.

In an optional implementation, a spectrum of the first dummy light source is consistent with a spectrum of the first input signal.

In this embodiment of this application, the spectrum of the first dummy light source is consistent with the spectrum of the first input signal, so that interference to the first input signal can be avoided. (Optionally, there may alternatively be a specific deviation, for example, ±3 dB, ±2.5 dB, ±2 dB, ±1.5 dB, ±1 dB or ±0.5 dB, between a spectrum of a dummy light signal and a spectrum of a communication signal. This is not limited in this application.)

In an optional implementation, the first power locking module further includes an optical amplifier, configured to receive the first input signal and output the first output signal, where if the optical power of the first input signal increases, a gain of the optical amplifier decreases; or if the optical power of the first input signal decreases, a gain of the optical amplifier increases.

In this embodiment of this application, an optical amplifier whose gain changes reversely with the optical power of the first input signal is used to compensate for the fluctuation of the optical power of the first input signal, so that the optical power of the first output signal is stable. Because gain adjustment of the optical amplifier is simple and quick, the optical power of the first output signal can be adjusted more quickly. In this way, the first output signal is more stable and damage to the signal is reduced.

In an optional implementation, the first power locking module includes the first dummy light source, the third multiplexer, and the optical amplifier, and the optical amplifier includes a first optical amplifier and a second optical amplifier. The third multiplexer is between the first optical amplifier and the second optical amplifier, and is configured to multiplex signals from the first dummy light source and the first optical amplifier and transmit a multiplexed signal to the second optical amplifier.

In this embodiment of this application, the third multiplexer is connected to an output port of the first optical amplifier, so that impact on a noise figure of an entire optical amplifier module (the first optical amplifier and the second optical amplifier) can be reduced, thereby reducing an insertion loss of the entire optical amplifier module and improving signal transmission quality.

In an optional implementation, the second power locking module is configured to change an optical power value of a signal passing through the second power locking module, to enable an optical power variation of the second output signal to be less than or equal to a second threshold.

In an optional implementation, the optical switch switches the signal connected to the downstream port from the first output signal to the second output signal if optical power values of the first input signal, the first output signal, the second input signal, and the second output signal meet any one of the following conditions: a difference between the optical power of the first input signal and optical power of the second input signal is greater than or equal to a third threshold; and/or a difference between the optical power of the first output signal and optical power of the second output signal is greater than or equal to a fourth threshold.

In this embodiment of this application, whether to perform switching of the first optical switch is determined based on a relationship between the optical power values of the first input signal, the first output signal, the second input signal, and the second output signal. A determining manner is simple and efficient. After a fault occurs in the link on which the first optical fiber is located, the fault can be quickly determined and the first optical switch can be controlled to perform switching, so that normal communication between an upstream optical transmission device (the second optical transmission device) and a downstream optical transmission device can be quickly restored.

According to a second aspect, an embodiment of this application provides an optical transmission device, where the optical transmission device is a second optical transmission device. The second optical transmission device includes: a communication unit, configured to send a communication signal; a dummy light unit, configured to send a dummy light signal, where a spectrum and optical power of the dummy light signal are consistent with a spectrum and optical power of the communication signal; and a second optical switch, configured to select the communication signal to be connected to a first optical fiber, and select the dummy light signal to be connected to a second optical fiber, where the first optical fiber and the second optical fiber are configured to transmit a signal to a first optical transmission device. If a fault occurs in a communication link on which the first optical fiber is located, the second optical switch switches a signal connected to the first optical fiber from the communication signal to the dummy light signal, switches a signal connected to the second optical fiber from the dummy light signal to the communication signal, and controls, during the switching, optical power variations of optical signals input to the first optical fiber and the second optical fiber to be within a fifth threshold.

In this embodiment of this application, for the second optical transmission device, a signal does not need to be split into two signals (for example, 50:50 optical splitting). In this way, an extra insertion loss introduced due to the 50:50 optical splitting can be reduced, and a link insertion loss of the signal is also correspondingly reduced.

In an optional implementation, the second optical switch includes a fourth multiplexer, where two input ports of the fourth multiplexer are respectively connected to the communication unit and the dummy light unit, and two output ports are respectively connected to the first optical fiber and the second optical fiber; and the fourth multiplexer is configured to adjust split ratios of the plurality of input ports during the switching of the optical switch, to enable the optical power variations of optical signals input to the first optical fiber and the second optical fiber to be less than or equal to the fifth threshold.

In this embodiment of this application, the split ratios of the plurality of input ports of the fourth multiplexer are adjusted, to control power values of optical signals output to the first optical fiber and the second optical fiber, to enable the optical power changes of the first optical fiber and the second optical fiber to be within the fifth threshold. Because split ratio adjustment of the multiplexer is simple and efficiency of adjusting and controlling the optical power is high, the optical power of the first optical fiber and the second optical fiber can be efficiently adjusted.

According to a third aspect, an embodiment of this application provides an optical transmission system. The optical transmission system includes the first optical transmission device according to the first aspect and a second optical transmission device. The first optical transmission device is connected to the second optical transmission device through a first optical fiber or a second optical fiber. The second optical transmission device is configured to transmit a signal to the first optical transmission device through the first optical fiber or the second optical fiber.

In an optional implementation, the second optical transmission device is the optical transmission device according to the second aspect.

In an optional implementation, the second optical transmission device includes a communication unit and a splitter. The communication unit is configured to send a communication signal. An input port of the splitter is connected to the communication unit, and two output ports are respectively connected to the first optical fiber and the second optical fiber. The splitter is configured to split the communication signal into a first communication signal and a second communication signal. The first communication signal and the second communication signal are respectively transmitted through the first optical fiber and the second optical fiber.

For beneficial effects of the second aspect and the third aspect, refer to the first aspect. Details are not described herein again.

### BRIEF DESCRIPTION OF DRAWINGS

FIG. 1 is an architectural diagram of a communication network according to this application;
FIG. 2 is a diagram of an optical power drop according to this application;
FIG. 3 is a diagram of a structure of a first optical transmission device according to an embodiment of this application;
FIG. 4 is a diagram of an effect of maintaining stability of optical power by a first optical transmission device according to an embodiment of this application;
FIG. 5 is a diagram of a structure of a first optical transmission device including an optical switch control module according to an embodiment of this application;
FIG. 6 is a diagram of a variation of optical power at each of points inside a first optical transmission device according to an embodiment of this application;
FIG. 7a is a diagram of a structure of a first optical switch according to an embodiment of this application;
FIG. 7b is a diagram of another structure of a first optical switch according to an embodiment of this application;
FIG. 8 is a diagram of another structure of a first optical switch according to an embodiment of this application;
FIG. 9 is a diagram of another structure of a first optical switch according to an embodiment of this application;
FIG. 10 is a diagram of a structure of a first power locking module according to an embodiment of this application;
FIG. 11 is a diagram of another structure of a first power locking module according to an embodiment of this application;
FIG. 12a is a diagram of another structure of a first power locking module according to an embodiment of this application;
FIG. 12b is a diagram of another structure of a first power locking module according to an embodiment of this application;
FIG. 13 is a diagram of another structure of a first power locking module according to an embodiment of this application;
FIG. 14 is a diagram of a structure of a second optical transmission device according to an embodiment of this application; and
FIG. 15 is a diagram of a structure of a second optical switch according to an embodiment of this application.

### DESCRIPTION OF EMBODIMENTS

The following describes embodiments of this application with reference to the accompanying drawings. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Embodiments of this application provide an optical transmission device and a related network, to stabilize optical power of a signal transmitted to a downstream optical transmission device, and reduce damage to the signal to the downstream optical transmission device.

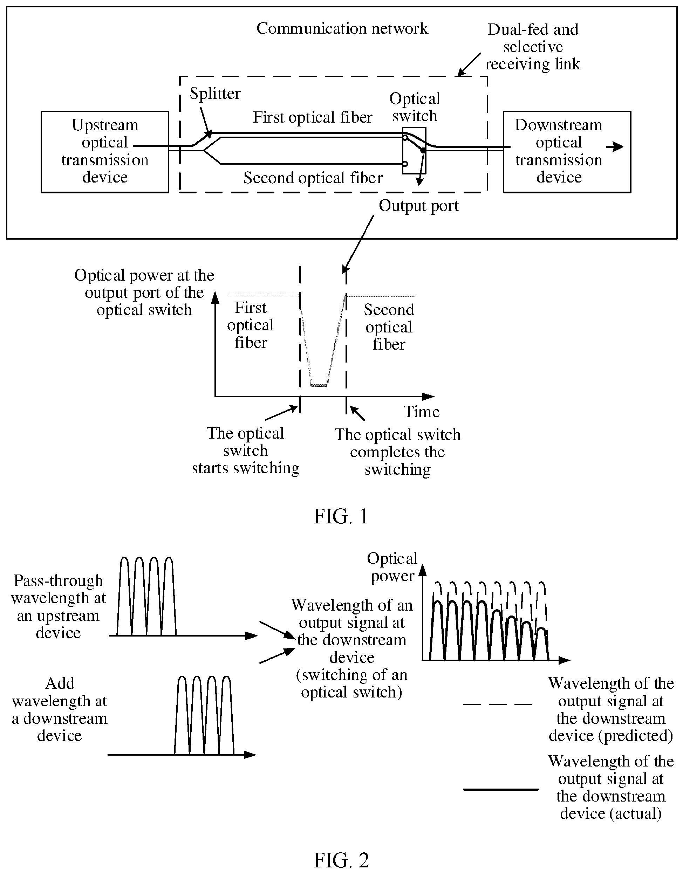

FIG. 1 is a diagram of an application network according to this application. As shown in FIG. 1, the network includes an upstream optical transmission device, a dual-fed and selective receiving link, and a downstream optical transmission device. The dual-fed and selective receiving link is used to protect a communication link between the upstream optical transmission device and the downstream optical transmission device.

The dual-fed and selective receiving link includes a splitter, two optical fibers, and an optical switch. The splitter is configured to split a signal from the upstream optical transmission device into two channels of signals, where one channel of signal is transmitted through a first optical fiber, and the other channel of signal is transmitted through a second optical fiber. The optical switch includes two input ports and one output port, where the two input ports are respectively connected to the first optical fiber and the second optical fiber, and the output port is connected to the downstream optical transmission device. An optical fiber connected to the downstream optical transmission device may be switched through switching, of the optical switch, between the two input ports. For example, in FIG. 1, the output port is connected to an upper input port. When a fault occurs in a communication link including the first optical fiber (for example, the first optical fiber is disconnected or cut), the optical switch may connect the output port to a lower input port, to connect the second optical fiber to the downstream optical transmission device. This ensures normal communication between the upstream optical transmission device and the downstream optical transmission device.

Optionally, in the communication network shown in FIG. 1, a protection link between the upstream optical transmission device and the downstream optical transmission device may alternatively be a multi-fed and selective receiving link including more protection links that is different from the dual fed and selective receiving link shown in FIG. 1. This is not limited in this application.

In the multi-fed and selective receiving link, a plurality of output ports of a splitter are connected to a plurality of optical fibers (for example, a first optical fiber, and a second optical fiber to an n^{th} optical fiber, where n is greater than or equal to 2). An optical switch includes n input ports and one output port, where the n input ports are respectively connected to corresponding optical fibers, and the output port is connected to the downstream optical transmission device. An optical fiber connected to the downstream optical transmission device may be switched through switching, of the optical switch, between the n input ports.

As shown in FIG. 1, in a process in which the optical switch switches the input port connected to the output port (in other words, switches the optical fiber connected to the downstream optical transmission device) (referred to as switching of the optical switch in this application), in a period of time, that is, time between two dashed lines in FIG. 1, optical power of a signal at the output port of the optical switch decreases, maintains at a low level, and rises. In this period of time, the optical power of the signal is significantly lower than a normal level. This is referred to as a power drop of the signal in this application.

For ease of description, the downstream optical transmission device is also referred to as a downstream device, and the upstream optical transmission device is also referred to as an upstream device. The downstream device can add/drop wavelengths of signals. Specifically, the downstream device may classify signals from the upstream device into a wavelength-dropping signal and a pass-through signal, to implement local wavelength dropping of the wavelength-dropping signal, and multiplex the pass-through signal and a local wavelength-adding signal and transmit the multiplexed signal for further downstream transmission. A wavelength of the pass-through signal is different from a wavelength of the local wavelength-adding signal, as shown in FIG. 2.

A Raman effect is a common phenomenon in an optical transmission device. The Raman effect means that Raman gains generated by an optical fiber for signals of different wavelengths are related to an integral of optical power of signals of all wavelengths that enter the optical fiber and a spacing between wavelengths. Therefore, after the signals are transmitted through the optical fiber, output optical power of signals of different wavelengths affects each other.

For the downstream device, output signals include the pass-through signal and the wavelength-adding signal, for example, signals shown by dashed lines in FIG. 2. It can be learned from descriptions of the embodiment shown in FIG. 1 that the switching of the optical switch causes power fading of the pass-through signal from the upstream device. Optical power of the pass-through signal is lower than predicted optical power due to the power fading of the pass-through signal. However, due to impact of the Raman effect, the power fading of the pass-through signal causes a power change of the wavelength-adding signal, so that an actual output signal (represented by a thick solid line in FIG. 2) is greatly different from an expected output signal (represented by a dashed line in FIG. 2) of the downstream device. The optical power change of the signal at the downstream device caused by the switching of the optical switch and the Raman effect affects a signal-to-noise ratio and the like of signal transmission, and consequently, signal transmission performance is affected.

To resolve the foregoing problem, embodiments of this application provide an optical transmission device and a related network. The optical transmission device provided in embodiments of this application controls an optical power change of an output signal to be within a target threshold, so that optical power of the output signal is stabilized, the optical power signal output to a downstream optical transmission device is stabilized, and damage to the signal to the downstream optical transmission device can be reduced.

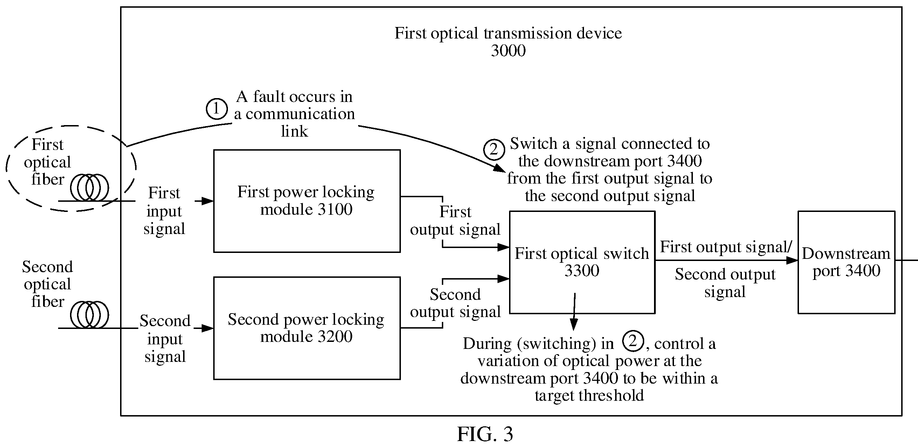

FIG. 3 is a diagram of a structure of an optical transmission device according to an embodiment of this application. The optical transmission device is configured to implement a function of the optical switch in the network shown in FIG. 1. To be specific, the optical transmission device is configured to: select a link (for example, a first optical fiber) from a multi-fed and selective receiving link (including n protection links, and when n=2, the link is a dual-fed and selective receiving link) to implement communication, and when the link cannot work normally, switch to another link (for example, a second optical fiber) for communication. The following uses a dual-fed and selective receiving link as an example for description. A structure in this embodiment of this application may alternatively be used in a multi-fed and selective receiving link including more protection links. This is not limited in this application.

As shown in FIG. 3, a first optical transmission device 3000 provided in this embodiment of this application includes a first power locking module 3100, a second power locking module 3200, and a first optical switch 3300. Optionally, the first optical transmission device 3000 may further include a downstream port 3400.

The first power locking module 3100 is configured to be connected to the first optical fiber, and the first power locking module 3100 receives a first input signal from a second optical transmission device through the first optical fiber. The first input signal becomes a first output signal after passing through the first power locking module 3100, and is output from the first power locking module 3100.

The second optical transmission device is an upstream optical transmission device of the first optical transmission device 3000, that is, an upstream device of the first optical transmission device 3000.

The first power locking module 3100 is configured to change an optical power value of a signal passing through the first power locking module 3100, to enable an optical power variation of the first output signal to be less than or equal to a first threshold. Optionally, the first threshold may be ±3 dB, ±2.5 dB, ±2 dB, ±1.5 dB, ±1 dB, ±0.5 dB, or the like. This is not limited in this application.

The second power locking module 3200 is configured to be connected to the second optical fiber, and the second power locking module 3200 receives a second input signal from the second optical transmission device through the second optical fiber. The second input signal becomes a second output signal after passing through the second power locking module 3200, and is output from the second power locking module 3200.

The second power locking module 3200 is configured to change an optical power value of a signal passing through the second power locking module 3200, to enable an optical power variation of the second output signal to be less than or equal to a second threshold. Optionally, the second threshold may be ±3 dB, ±2.5 dB, ±2 dB, ±1.5 dB, ±1 dB, ±0.5 dB, or the like. This is not limited in this application.

The first optical switch 3300 is configured to select one signal from the first output signal and the second output signal to be connected to the downstream port 3400. For example, the first optical switch 3300 may select the first output signal (that is, a signal output from the first power locking module 3100) to be connected to the downstream port 3400.

The downstream port 3400 is configured to transmit a connected signal (for example, the foregoing first output signal) to a downstream device of the first optical transmission device 3000 (to be specific, a downstream optical transmission device of the first optical transmission device 3000).

If a fault occurs in a communication link on which the first optical fiber is located, the first optical switch 3300 switches the signal connected to the downstream port 3400 from the first output signal to the second output signal (that is, a signal output from the second power locking module 3200), and controls, during the switching, a variation of optical power at the downstream port 3400 to be within the target threshold.

In this embodiment of this application, during the communication link switching, the first optical switch 3300 controls the variation of the optical power at the downstream port 3400 to be within the target threshold, so that optical power of an output signal of the first optical transmission device 3000 can be stabilized (so that a fluctuation amplitude of the optical power of the output signal of the first optical transmission device 3000 is smaller), the optical power signal output to the downstream optical transmission device is stabilized (a fluctuation degree of the optical power of the signal at the downstream optical transmission device is reduced), and damage to the signal to the downstream optical transmission device can be reduced.

Optionally, the optical transmission device 3000 provided in this embodiment of this application may be used in the multi-fed and selective receiving link. In the multi-fed and selective receiving link, if the quantity n of protection links is greater than or equal to 2 (in other words, a quantity n of optical fibers is greater than or equal to 2), the first optical transmission device 3000 may include n power locking modules. The n power locking modules include the first power locking module 3100 and the second power locking module 3200. Each power locking module receives an input signal from a corresponding optical fiber, and outputs a corresponding output signal. The first optical switch 3300 may select one channel of output signal from n channels of output signals output from the n power locking modules to be connected to the downstream port 3400. The selected one channel of output signal is referred to as the first output signal, and a corresponding power locking module is the first power locking module 3100. If a fault occurs in a communication link connected to the first optical switch 3300, the first optical switch 3300 switches the signal connected to the downstream port 3400 from a currently connected output signal to another output signal (to be specific, any channel of signal other than the currently connected output signal in the n channels of output signals). In this application, the output signal after the switching is referred to as the second output signal, and a corresponding power locking module is the second power locking module 3200. During the switching, the first optical switch 3300 may control the variation of the optical power at the downstream port 3400 to be within the target threshold.

In this embodiment of this application, the target threshold may be ±3 dB, ±2.5 dB, ±2 dB, ±1.5 dB, ±1 dB, ±0.5 dB, or the like. This is not limited in this application.

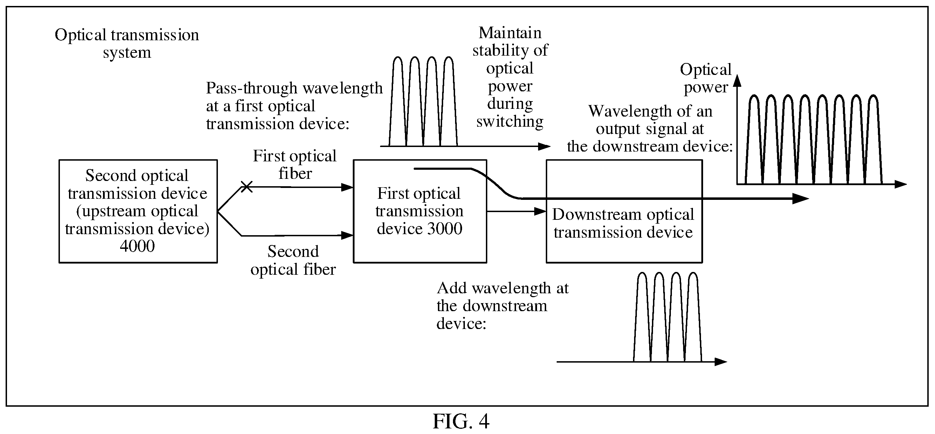

The first optical transmission device 3000 provided in this embodiment of this application may be used in an optical transmission system shown in FIG. 4. The system includes the first optical transmission device 3000, an upstream optical transmission device of the first optical transmission device 3000 (a second optical transmission device 4000), and a downstream optical transmission device of the first optical transmission device 3000. The second optical transmission device 4000 is connected to the first optical transmission device 3000 through the first optical fiber and the second optical fiber, where the first optical fiber and the second optical fiber are used to implement link protection between the second optical transmission device 4000 and the first optical transmission device 3000.

If the second optical transmission device 4000 communicates with the first optical transmission device 3000 through the first optical fiber, and a fault occurs in a communication link of the first optical fiber, the first optical transmission device 3000 switches the communication link between the second optical transmission device 4000 and the first optical transmission device 3000 from the first optical fiber to the second optical fiber.

According to the first optical transmission device 3000 provided in this embodiment of this application, stability of the optical power of the output signal of the first optical transmission device 3000 (namely, the signal transmitted to the downstream port 3400 in the embodiment in FIG. 3) can be maintained during the switching. In this case, for the downstream optical transmission device, power fading does not occur in optical power of a pass-through signal from the first optical transmission device, and a Raman effect does not affect a variation of optical power of a wavelength-adding signal at the downstream optical transmission device. The optical power of the pass-through signal and optical power of the wavelength-adding signal are stable, and damage to the signals is reduced or even eliminated.

It should be noted that, the quantity n of optical fibers connected between the second optical transmission device 4000 and the first optical transmission device 3000 may alternatively be greater than 2. The first optical fiber and the second optical fiber are two optical fibers in the n optical fibers, and represent communication links used before and after the switching in this embodiment of this application. Therefore, the first optical fiber and the second optical fiber do not limit the quantity of optical fibers between the second optical transmission device 4000 and the first optical transmission device 3000.

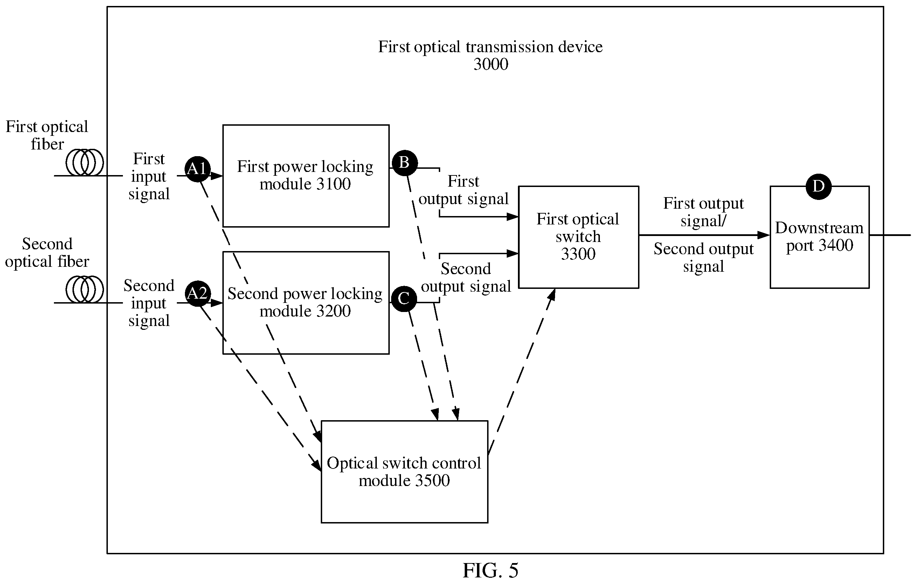

Optionally, as shown in FIG. 5, the optical transmission device 3000 may further include an optical switch control module 3500. The optical switch control module 3500 may obtain optical power at an input port A1 and an output port B of the first power locking module 3100, and optical power at an input port A2 and an output port C of the second power locking module 3200, and control, based on the foregoing information, the first optical switch 3300 to perform switching. If a fault occurs in a link on which the first optical fiber is located, a specific procedure in which the first optical transmission device 3000 provided in this embodiment of this application performs switching is as follows:
a fault occurs in the communication link on which the first optical fiber is located.

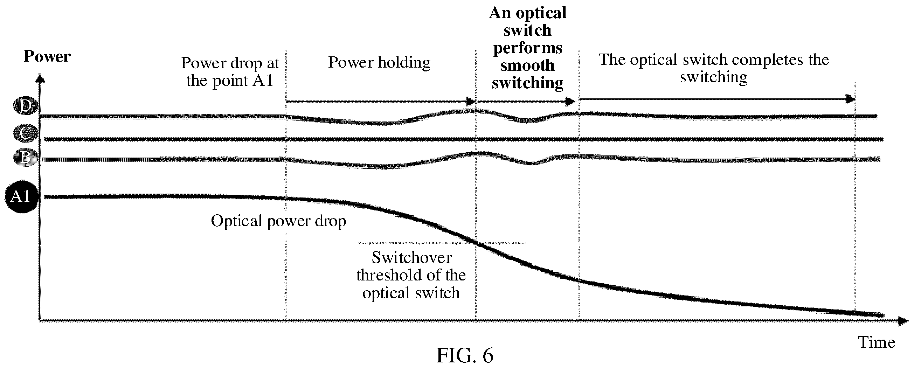

If the first optical switch 3300 selects the first output signal to be connected to the downstream port 3400, if a fault occurs in the communication link on which the first optical fiber is located, the optical power at A1 drops, and a corresponding optical power change is shown in FIG. 6.

In a drop process of the optical power at the point A1, the first power locking module 3100 maintains stability of the optical power at the point B.

The first power locking module 3100 is configured to change the optical power value of the signal passing through the first power locking module 3100. Even if optical power of the first input signal input to the first power locking module 3100 drops (that is, the power drop occurs at the point A1), the optical power variation of the first output signal can be maintained to be less than or equal to the first threshold, to ensure that the optical power at the point B is stable (as shown in FIG. 6, a variation of the optical power at the point B is stable at a power holding phase), and is not affected by the optical power drop at the point A1.

In the power holding phase, because the optical power at the point B (namely, optical power of the first output signal) is stable, the first output signal is transmitted to the downstream port 3400 via the first optical switch 3300, and the optical power at the downstream port 3400 is also stable (that is, optical power at a point D is also stable). Therefore, in the power holding phase, the optical power at the downstream port 3400 may be maintained at a stable level based on a function of the first power locking module 3100, and damage to the signal may be reduced or even eliminated.

The optical switch control module 3500 obtains optical power PA1, PA2, PB, and PC at A1, A2, B, and C.

The optical power PA1 at the input port A1 of the first power locking module 3100 is the optical power of the first input signal; the optical power PB at the output port B of the first power locking module 3100 is the optical power of the first output signal; the optical power PA2 at the input port A2 of the second power locking module 3200 is optical power of the second input signal; and the optical power PC at the output port C of the second power locking module 3200 is optical power of a second output signal.

Optionally, the optical switch control module 3500 may directly detect PA1, PA2, PB, and PC (measured in dBm), or may obtain PA1, PA2, PB, and PC through interaction with detection devices at A1, A2, B, and C. This is not limited in this application.

The optical switch control module 3500 determines whether to perform the switching of the optical switch 3300 based on PA1, PA2, PB, and PC.

The optical switch control module 3500 may determine, based on PA1, PA2, PB, and PC, whether to control the first optical switch 3300 to switch the signal connected to the downstream port 3400 from the first output signal to the second output signal (for ease of description, referred to as switching of the first optical switch 3300 in the following descriptions).

The optical switch control module 3500 may determine, based on conditions shown in Table 1, whether to perform the switching (also referred to as switchover in this embodiment of this application) of the first optical switch 3300.

**Table 1 Conditions for the switching of the first optical switch 3300**

| PA2-PA1>th1 | PC-PB>th2 | Whether the optical switch performs the switchover |
|---|---|---|
| Y | N | Y |
| N | N | N |
| Y | Y | Y |
| N | Y | Y |

PA1 represents a value of the optical power at A1, that is, an optical power value of the first input signal; PA2 represents a value of the optical power at A2, that is, an optical power value of the second input signal; PB represents a value of the optical power at B, that is, an optical power value of the first output signal; and PC represents a value of the optical power at C, that is, an optical power value of the second output signal.

th1 represents a minimum value of a difference between the optical power of the first input signal and the optical power of the second input signal when a fault occurs in the link on which the first optical fiber is located. When the difference between the optical power of the first input signal and the optical power of the second input signal is greater than or equal to th1, it indicates that link transmission on the first optical fiber is greatly different from link transmission on the second optical fiber, and a fault may occur in the link of the first optical fiber that is being used. In this embodiment of this application, th1 is also referred to as a third threshold.

If a fault occurs in the first power locking module 3100 and stability of the optical power of the first output signal cannot be ensured, there is also a definite difference between the optical power of the first output signal and the optical power of the second output signal, that is, there is a definite difference between PB and PC.

th2 represents a minimum value of a difference between the optical power of the first output signal and the optical power of the second output signal when a fault occurs in the link on which the first optical fiber is located. When the difference between the optical power of the first output signal and the optical power of the second output signal is greater than or equal to th2, it may also indicate that link transmission on the first optical fiber is greatly different from link transmission on the second optical fiber, and a fault may occur in the link of the first optical fiber that is being used. In this embodiment of this application, th2 is also referred to as a fourth threshold.

That is, the first optical switch 3300 may be controlled to perform switching provided that at least one of the following conditions is met:
the difference between the optical power of the first input signal and the optical power of the second input signal is greater than or equal to the third threshold; and/or
the difference between the optical power of the first output signal and the optical power of the second output signal is greater than or equal to the fourth threshold.

In this embodiment of this application, whether to perform switching of the first optical switch 3300 is determined based on a relationship between optical power values of the first input signal, the first output signal, the second input signal, and the second output signal. A determining manner is simple and efficient. After a fault occurs in the link on which the first optical fiber is located, the fault can be quickly determined and the first optical switch 3300 can be controlled to perform switching, so that normal communication between the upstream optical transmission device (the second optical transmission device) and the downstream optical transmission device can be quickly restored.

When the switchover condition of the first optical switch 3300 is met, the optical switch control module 3500 controls the first optical switch 3300 to perform smooth switching.

Optionally, the optical switch control module 3500 may deliver a control instruction to the first optical switch 3300 to control the optical switch 3300 to perform switching. Optionally, the optical switch control module 3500 may alternatively be integrated into the first optical switch 3300. In this structure, the first optical switch 3300 may determine whether to perform switching.

The first optical switch 3300 may smoothly switch from an original path from the point B to the point D to a path from the point C to the point D (that is, switch the signal connected to the downstream port 3400 from the first output signal to the second output signal as described above), to implement communication between the second optical transmission device 4000 and the first optical transmission device 3000 through the second optical fiber.

During the switching of the first optical switch 3300, the first optical switch 3300 may control the variation of the optical power at the downstream port 3400 to be within the target threshold (refer to a variation of optical power at the point D in a smooth switching phase of the optical switch in FIG. 6). The optical power of the output signal is stabilized, the optical power signal output to the downstream optical transmission device is stabilized, and the damage to the signal to the downstream optical transmission device can be reduced.

Optionally, the first optical switch 3300 may have a plurality of structural designs. During the link switching, stability of the optical power at the downstream port 3400 is maintained based on different principles.

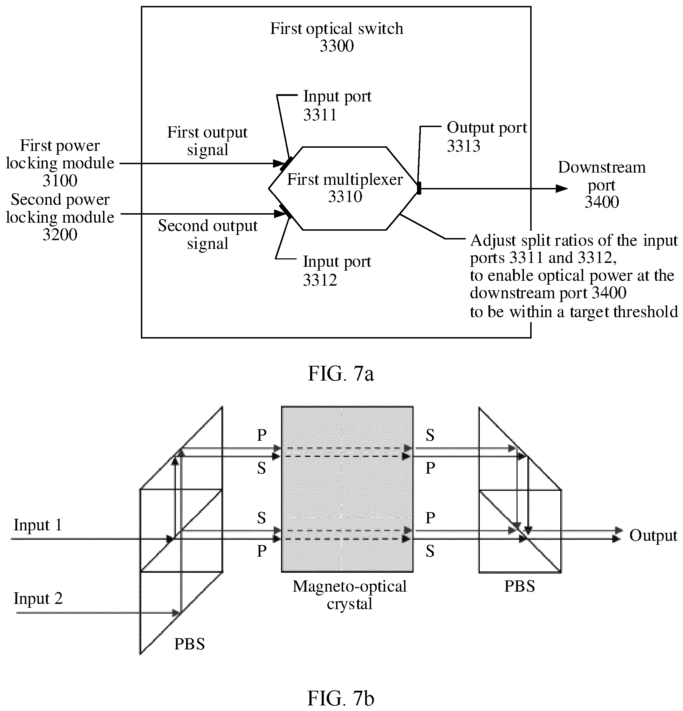

Optionally, the first optical switch 3300 may include a multiplexer with a variable split ratio, where the multiplexer is referred to as a first multiplexer 3310 in this embodiment of this application. As shown in FIG. 7a, the first multiplexer 3310 includes two input ports 3311 and 3312 and one output port 3313. The input port 3311 is connected to the first power locking module 3100, and is configured to receive the first output signal. The input port 3312 is connected to the second power locking module 3200, and is configured to receive the second output signal. The output port 3313 is connected to the downstream port 3400, and is configured to output a signal to the downstream port 3400.

The first multiplexer 3310 is configured to adjust split ratios of the input port 3311 and the input port 3312 during switching of the first optical switch 3300, to enable the variation of the optical power at the downstream port 3400 to be less than or equal to the target threshold.

Optionally, the first multiplexer 3310 may be implemented by using an interference structure, for example, a Mach-Zehnder interferometer (Mach-Zehnder interferometer, MZI) or a polarization interference structure. This is not limited in this application.

A structure of a first multiplexer 3310 of the polarization interference structure is shown in FIG. 7b. A magneto-optical crystal in the middle has the following features: When a drive voltage of the magneto-optical crystal is linearly changed, a polarization state rotates in a specific direction, so that S light rotates to P light that is completely orthogonal to the S light, and the P light rotates to the S light that is completely orthogonal to the P light. The two input optical signals can be switched through polarization beam combination. In this way, smooth switching of an optical switch 3300 (the first multiplexer 3310) is implemented based on a magneto-optical effect.

The first optical transmission device 3000 provided in this embodiment of this application may be used in the multi-fed and selective receiving link including n protection links. n is greater than or equal to 2. Correspondingly, the first optical switch 3300 may include an output port 3313 and n input ports. The n input ports are correspondingly connected to n power locking modules, and a first power locking module 3100 and a second power locking module 3200 are two of the n power locking modules, and represent power locking modules connected before and after switching. In FIG. 7a and FIG. 7b, two input ports are used as an example, and a quantity n of input ports is not limited.

In this embodiment of this application, split ratios of a plurality of input ports of the first multiplexer 3310 are adjusted to control a power value of an optical signal output to the downstream port 3400, to enable the variation of the optical power at the downstream port 3400 to be within the target threshold. Because split ratio adjustment of the multiplexer is simple and efficiency of adjusting and controlling the optical power is high, the optical power at the downstream port 3400 can be efficiently adjusted.

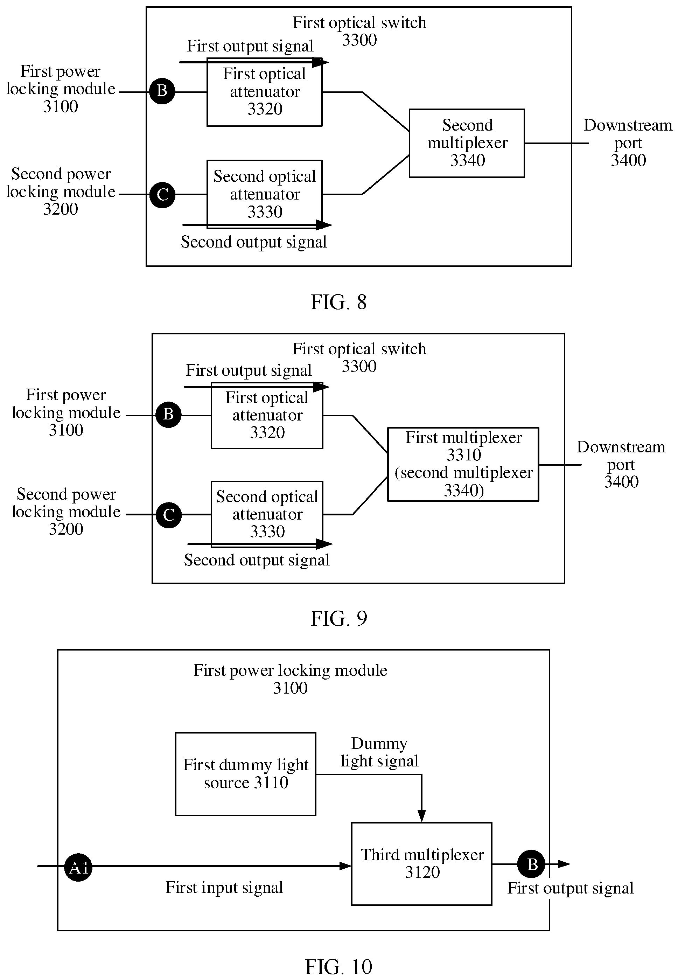

Optionally, the first optical switch 3300 may include a plurality of optical attenuators, and different optical attenuators are used to adjust optical power of signals on different links, to control the variation of the optical power at the downstream port 3400 to be within the target threshold. As shown in FIG. 8, the first optical switch 3300 may include a first optical attenuator 3320, a second optical attenuator 3330, and a second multiplexer 3340.

The first optical attenuator 3320 is connected to the first power locking module 3100 and the second multiplexer 3340, and is configured to transmit the first output signal at the point B to the second multiplexer 3340. The second optical attenuator 3330 is connected to the second power locking module 3200 and the second multiplexer 3340, and is configured to transmit the second output signal at the point C to the second multiplexer 3340. The second multiplexer 3340 includes a plurality of input ports and one output port. The input ports of the second multiplexer 3340 are connected to the first optical attenuator 3320 and the second optical attenuator 3330, and the output port is connected to the downstream port 3400, and is configured to transmit the first output signal and the second output signal to the downstream port 3400.

As the switching of the first optical switch 3300 (that is, the smooth switching phase of the optical switch in FIG. 6) is performed, an attenuation value of the first optical attenuator 3320 gradually increases, and an attenuation value of the second optical attenuator 3330 gradually decreases.

For example, after the first output signal and the second output signal respectively pass through the first optical attenuator (variable optical attenuator, VOA) 3320 and the second optical attenuator 3330, the second multiplexer 3340 may multiplex the first output signal and the second output signal in an equal ratio of 50:50 and then output a multiplexed signal to the point D.

In a default state, attenuation of the first optical attenuator 3320 is 0 dB, and attenuation of the second optical attenuator 3330 is at least 30 dB (to ensure that power crosstalk of the point C to the point D is low enough). When the power at the point B is equivalent to the power at the point C, power at the point D is PD=PB*1*0.5+PC*1e-3*0.5≈0.5*PB. In other words, in this case, a state of the first optical switch 3300 is that a path from the point B to the point D is on, and a path from the point C to the point D is off.

During the switching, the attenuation of the first optical attenuator 3320 and the attenuation of the second optical attenuator 3330 (corresponding to attenuation coefficients Att1 and Att2) may be adjusted synchronously based on data (PA1, PA2, PC, and PD) obtained by the optical switch control module 3500. For example, when the attenuation of the first optical attenuator 3320 increases gradually, the attenuation of the second optical attenuator 3330 decreases synchronously, so that PD=PB* Att1 *0.5+PC* Att2*0.5 remains unchanged in the entire switching process. When the switching ends, the attenuation of the first optical attenuator 3320 is at least 30 dB, and the attenuation of the second optical attenuator 3330 is 0 dB. In this case, a final state of the power at the point D is PD=PB*1e-3*0.5+PC*1*0.5≈0.5*PC. In other words, in this case, the state of the first optical switch 3300 is that the power at the point B is in an off state, and the power at the point C is in an on state.

It should be noted that 30 dB is merely an example, and the attenuation value may be a larger or a smaller value, provided that the power crosstalk of the point C to the point D can be ensured to be low enough before the switching, and power crosstalk of the point B to the point D can be ensured to be low enough after the switching. This is not limited in this application.

In this embodiment of this application, the optical attenuator is used to adjust optical power values of the optical signals on the two links, to control the variation of the optical power at the downstream port 3400 to be within the target threshold. Because the optical attenuator controls the optical power in a fine manner, the optical power at the downstream port 3400 can be precisely controlled, so that the optical power at the downstream port 3400 is more stable and damage to the signal is reduced.

Optionally, the structures shown in FIG. 7a and FIG. 8 may alternatively be combined. A multiplexer is used to change split ratios of two links, and optical attenuators are used to change attenuation of the two links. As shown in FIG. 9, in this structure, the second multiplexer 3340 for multiplexing the first output signal and the second output signal and transmitting a multiplexed signal is transmitted to the downstream port 3400 is also the first multiplexer 3310 with an adjustable split ratio. For descriptions of the first multiplexer 3310 and the second multiplexer 3340, refer to the descriptions of embodiments shown in FIG. 7a and FIG. 8. Details are not described herein again.

In this embodiment of this application, the first multiplexer 3310 with an adjustable split ratio may be used to quickly adjust the optical power at the downstream port 3400, and the first optical attenuator 3320 and the second optical attenuator 3330 may be used to finely adjust the optical power at the downstream port 3400. This not only improves a response speed but also improves adjustment precision, so that the optical power at the downstream port 3400 is more stable, damage to the signal is further reduced.

Optionally, the first power locking module 3100 may alternatively have a plurality of structural designs. Stability of the optical power of the first output signal is maintained based on different principles.

Optionally, the first power locking module 3100 may include a dummy light source. The dummy light source may be used to stabilize the optical power of the first output signal. As shown in FIG. 10, the first power locking module 3100 may include a first dummy light source 3110 and a third multiplexer 3120.

The third multiplexer 3120 is configured to multiplex a signal from the first dummy light source 3110 and the first input signal (that is, a signal at the point A1) to obtain the first output signal. If the optical power PA1 of the first input signal increases, optical power of the first dummy light source 3110 decreases; or if the optical power PA1 of the first input signal decreases, optical power of the first dummy light source 3110 increases, so that the optical power variation of the first output signal is less than or equal to the first threshold.

Optionally, a spectrum of the first dummy light source 3110 may be consistent with a spectrum of the first input signal, so that interference to the first input signal is avoided. (Optionally, there may alternatively be a specific deviation, for example, ±3 dB, ±2.5 dB, ±2 dB, ±1.5 dB, ±1 dB or ±0.5 dB, between a spectrum of a dummy light signal and a spectrum of a communication signal. This is not limited in this application.)

Optionally, PA1 may be obtained by the optical switch control module 3500, to control a value of the optical power of the first dummy light source 3110; or after the optical switch control module 3500 obtains PA1, a value of the optical power of the first dummy light source 3110 is adjusted based on control of the optical switch control module 3500. This is not limited in this application.

In this embodiment of this application, the first dummy light source 3110 whose optical power changes reversely with the first input signal is used to compensate for fluctuation of the optical power of the first input signal, so that the optical power of the first output signal is stable. Because a structure and a connection relationship of the first dummy light source 3110 are simple, a structure of the entire optical transmission device 3000 is simpler.

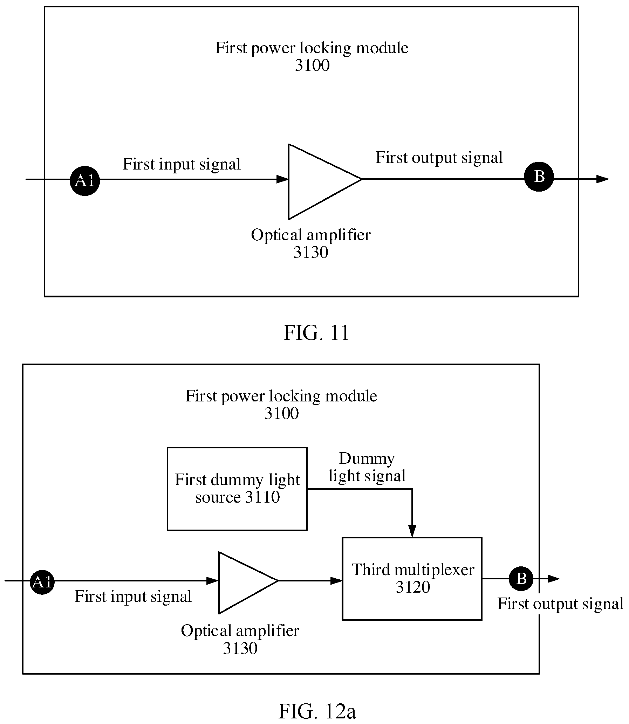

Optionally, the first power locking module 3100 may further include an optical amplifier, where the optical amplifier is used to change a gain of the optical amplifier for the first input signal, to stabilize the optical power of the first output signal. As shown in FIG. 11, the first power locking module 3100 may include an optical amplifier 3130.

The optical amplifier 3130 is located on a link between the point A1 and the point B, and is configured to receive the first input signal and output the first output signal. A gain of the optical amplifier 3130 may vary with the optical power value of the first input signal. Specifically, if the optical power of the first input signal increases, the gain of the optical amplifier 3130 decreases; or if the optical power of the first input signal decreases, the gain of the optical amplifier 3130 increases.

Optionally, PA1 may be obtained by the optical switch control module 3500, to control the gain of the optical amplifier 3130; or after the optical switch control module 3500 obtains PA1, the gain of the optical amplifier 3130 is adjusted based on control of the optical switch control module 3500. This is not limited in this application.

In this embodiment of this application, the optical amplifier 3130 whose gain changes reversely with the optical power of the first input signal is used to compensate for the fluctuation of the optical power of the first input signal, so that the optical power of the first output signal is stable. Because gain adjustment of the optical amplifier 3130 is simple and quick, the optical power of the first output signal can be adjusted more quickly. In this way, the first output signal is more stable and damage to the signal is reduced.

Optionally, the first power locking module 3100 may alternatively include a plurality of optical amplifiers and a dummy light source. The dummy light source is used to change the optical power of the first output signal, and the optical power of the first output signal is adjusted by adjusting a gain of the optical amplifier.

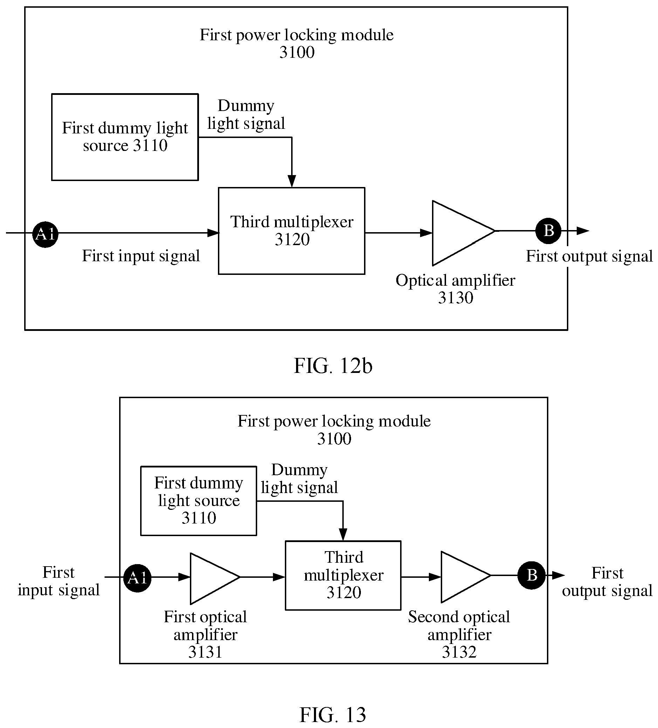

As shown in FIG. 12a and FIG. 12b, the first power locking module 3100 may include a first dummy light source 3110, a third multiplexer 3120, and an optical amplifier 3130. For descriptions of the first dummy light source 3110, the third multiplexer 3120, and the optical amplifier 3130, refer to descriptions of embodiments shown in FIG. 10 and FIG. 11. Details are not described herein again.

The third multiplexer 3120 may be connected to an output port of the optical amplifier 3130 as shown in FIG. 12a, or may be connected to an input port of the optical amplifier 3130 as shown in FIG. 12b. This is not limited in this application.

Optionally, the optical amplifier 3130 includes a first optical amplifier 3131 and a second optical amplifier 3132. As shown in FIG. 13, a third multiplexer 3120 may be located between a first optical amplifier 3131 and a second optical amplifier 3132.

In this embodiment of this application, the third multiplexer 3120 is connected to an output port of the first optical amplifier 3131, so that impact on a noise figure of an entire optical amplifier module (the first optical amplifier 3131 and the second optical amplifier 3132) can be reduced, thereby reducing an insertion loss of the entire optical amplifier module and improving signal transmission quality.

For a structure of the second power locking module 3200, refer to descriptions of the first power locking module 3100 in FIG. 10 to FIG. 13. Details are not described herein again.

A structure of the first optical transmission device 3000 shown in any one of embodiments in FIG. 3, FIG. 5, and FIG. 13 may be used in the optical transmission system shown in FIG. 4.

Optionally, an embodiment of this application further provides a structure of a second optical transmission device 4000. The structure may also be applied to the optical transmission system shown in FIG. 4.

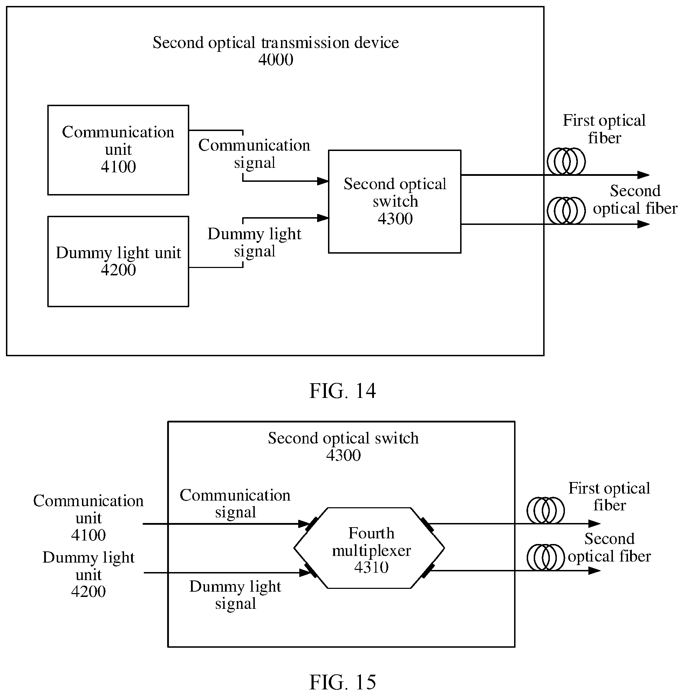

As shown in FIG. 14, the second optical transmission device 4000 may include a communication unit 4100, a dummy light unit 4200, and a second optical switch 4300. The communication unit 4100 is configured to send a communication signal, and the dummy light unit 4200 is configured to send a dummy light signal. A spectrum and optical power of the dummy light signal are consistent with a spectrum and optical power of the communication signal. (Optionally, there may alternatively be a specific deviation, for example, ±3 dB, ±2.5 dB, ±2 dB, ±1.5 dB, ±1 dB or ±0.5 dB, between the optical power of the dummy light signal and the optical power of the communication signal. This is not limited in this application.)

In a default state, the second optical switch 4300 selects the communication signal to be connected to a first optical fiber, and selects the dummy light signal to be connected to a second optical fiber. Both the first optical fiber and the second optical fiber are configured to transmit a signal to a first optical transmission device.

If a fault occurs in the communication link on which the first optical fiber is located, an optical switch control module 3500 of a first optical transmission device 3000 may detect a condition for triggering switchover of a first optical switch 3300, and notify the first optical switch 3300 of the first optical transmission device 3000 and the second optical switch 4300 of the second optical transmission device 4000 to start switchover.

Specifically, a switchover process of the second optical switch 4300 is as follows: The second optical switch 4300 switches a signal connected to the first optical fiber from the communication signal to the dummy light signal, and switches a signal connected to the second optical fiber from the dummy light signal to the communication signal. During the switching of the second optical switch 4300, the second optical switch 4300 may control optical power variations of optical signals input to the first optical fiber and the second optical fiber to be within a fifth threshold. Optionally, the fifth threshold may be ±3 dB, ±2.5 dB, ±2 dB, ±1.5 dB, ±1 dB, ±0.5 dB, or the like. This is not limited in this application.

In this embodiment of this application, for the second optical transmission device 4000, a signal does not need to be split into two signals (for example, 50:50 optical splitting). In this way, an extra insertion loss introduced due to the 50:50 optical splitting can be reduced, and a link insertion loss of the signal is also correspondingly reduced.

Optionally, the second optical switch 4300 may include a multiplexer with a variable split ratio, so that the optical power of signals input to the first optical fiber and the second optical fiber is more stable. As shown in FIG. 15, the second optical switch 4300 includes a fourth multiplexer 4310. Two input ports of the fourth multiplexer 4310 are respectively connected to the communication unit 4100 and the dummy light unit 4200, and two output ports are respectively connected to the first optical fiber and the second optical fiber.

The fourth multiplexer 4310 is configured to adjust split ratios of the plurality of input ports during the switching of the second optical switch 4300, to enable optical power variations of optical signals input to the first optical fiber and to the second optical fiber to be less than or equal to a fifth threshold.

In this embodiment of this application, the split ratios of the plurality of input ports of the fourth multiplexer 4310 are adjusted to control power values of optical signals output to the first optical fiber and the second optical fiber, to enable the optical power changes of the first optical fiber and the second optical fiber to be within the fifth threshold. Because split ratio adjustment of the multiplexer is simple and efficiency of adjusting and controlling the optical power is high, the optical power of the first optical fiber and the second optical fiber can be efficiently adjusted.

Optionally, in this embodiment of this application, the second optical transmission device 4000 may alternatively be of a simple optical splitting structure. Specifically, the second optical transmission device 4000 may include a communication unit and a splitter. The communication unit is configured to send a communication signal.

An input port of the splitter is connected to the communication unit, and two output ports are respectively connected to a first optical fiber and a second optical fiber. The splitter is configured to split the communication signal into a first communication signal and a second communication signal. The first communication signal and the second communication signal are respectively transmitted through the first optical fiber and the second optical fiber.

Optionally, the splitter may be a 50:50 equal-ratio splitter, or may be an unequal-ratio splitter. This is not limited in this application.

Optionally, if the splitter is used in a multi-fed and selective receiving link, the splitter may include more output ports, to split the communication signal to more optical fibers for transmission. This is not limited in this application.

It may be clearly understood by a person skilled in the art that, for the purpose of convenient and brief description, for a detailed working process of the foregoing system, apparatus, and unit, refer to a corresponding process in the foregoing embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. An optical transmission device, wherein the optical transmission device is a first optical transmission device, and the first optical transmission device comprises:
a first power locking module, configured to receive a first input signal from a second optical transmission device through a first optical fiber, and output a first output signal;
a second power locking module, configured to receive a second input signal from the second optical transmission device through a second optical fiber, and output a second output signal; and
a first optical switch, configured to select the first output signal to be connected to a downstream port of the first optical transmission device, wherein
if a fault occurs in a communication link on which the first optical fiber is located, the first optical switch switches a signal connected to the downstream port from the first output signal to the second output signal, and controls, during the switching, a variation of optical power at the downstream port to be within a target threshold.

2. The device according to claim 1, wherein the first optical switch comprises:
a first multiplexer, wherein the first multiplexer comprises an output port and a plurality of input ports, two input ports in the plurality of input ports are respectively connected to the first power locking module and the second power locking module, and the output port is connected to the downstream port, wherein
the first multiplexer is configured to adjust split ratios of the two input ports during the switching, to enable the variation of the optical power at the downstream port to be less than or equal to the target threshold.

3. The device according to claim 1 or 2, wherein the first optical switch comprises:
a first optical attenuator, connected to the first power locking module and a second multiplexer, and configured to transmit the first output signal to the second multiplexer; and
a second optical attenuator, connected to the second power locking module and the second multiplexer, and configured to transmit the second output signal to the second multiplexer, wherein
input ports of the second multiplexer are respectively connected to the first optical attenuator and the second optical attenuator, and an output port is connected to the downstream port, and is configured to transmit the first output signal and the second output signal to the downstream port; and
as the switching is performed, an attenuation value of the first optical attenuator gradually increases, and an attenuation value of the second optical attenuator gradually decreases.

4. The device according to any one of claims 1 to 3, wherein the first power locking module is configured to change an optical power value of a signal passing through the first power locking module, to enable an optical power variation of the first output signal to be less than or equal to a first threshold.

5. The device according to claim 4, wherein the first power locking module further comprises a first dummy light source and a third multiplexer, wherein
the third multiplexer is configured to multiplex a signal from the first dummy light source and the first input signal to obtain the first output signal; and
if optical power of the first input signal increases, optical power of the first dummy light source decreases; or
if optical power of the first input signal decreases, optical power of the first dummy light source increases.

6. The device according to claim 4 or 5, wherein a spectrum of the first dummy light source is consistent with a spectrum of the first input signal.

7. The device according to any one of claims 4 to 6, wherein the first power locking module further comprises:
an optical amplifier, configured to receive the first input signal and output the first output signal, wherein
if the optical power of the first input signal increases, a gain of the optical amplifier decreases; or
if the optical power of the first input signal decreases, a gain of the optical amplifier increases.

8. The device according to claim 7, wherein the first power locking module comprises the first dummy light source, the third multiplexer, and the optical amplifier, and the optical amplifier comprises a first optical amplifier and a second optical amplifier, wherein
the third multiplexer is between the first optical amplifier and the second optical amplifier, and is configured to multiplex signals from the first dummy light source and the first optical amplifier and transmit a multiplexed signal to the second optical amplifier.

9. The device according to any one of claims 1 to 8, wherein the second power locking module is configured to change an optical power value of a signal passing through the second power locking module, to enable an optical power variation of the second output signal to be less than or equal to a second threshold.

10. The device according to any one of claims 1 to 9, wherein the optical switch switches the signal connected to the downstream port from the first output signal to the second output signal if optical power values of the first input signal, the first output signal, the second input signal, and the second output signal meet any one of the following conditions:
a difference between the optical power of the first input signal and optical power of the second input signal is greater than or equal to a third threshold; and/or
a difference between optical power of the first output signal and optical power of the second output signal is greater than or equal to a fourth threshold.

11. An optical transmission device, wherein the optical transmission device is a second optical transmission device, and the second optical transmission device comprises:
a communication unit, configured to send a communication signal;
a dummy light unit, configured to send a dummy light signal, wherein a spectrum and optical power of the dummy light signal are consistent with a spectrum and optical power of the communication signal; and
a second optical switch, configured to select the communication signal to be connected to a first optical fiber, and select the dummy light signal to be connected to a second optical fiber, wherein the first optical fiber and the second optical fiber are configured to transmit a signal to a first optical transmission device, wherein
if a fault occurs in a communication link on which the first optical fiber is located, the second optical switch switches a signal connected to the first optical fiber from the communication signal to the dummy light signal, switches a signal connected to the second optical fiber from the dummy light signal to the communication signal, and controls, during the switching, optical power variations of optical signals input to the first optical fiber and the second optical fiber to be within a fifth threshold.

12. The optical transmission device according to claim 11, wherein the second optical switch comprises:
a fourth multiplexer, wherein two input ports of the fourth multiplexer are respectively connected to the communication unit and the dummy light unit, and two output ports are respectively connected to the first optical fiber and the second optical fiber, wherein
the fourth multiplexer is configured to adjust split ratios of the two input ports during the switching of the optical switch, to enable the optical power variations of optical signals input to the first optical fiber and the second optical fiber to be less than or equal to the fifth threshold.

13. An optical transmission system, comprising the first optical transmission device according to any one of claims 1 to 10 and a second optical transmission device, wherein
the first optical transmission device is connected to the second optical transmission device through a first optical fiber or a second optical fiber; and
the second optical transmission device is configured to transmit a signal to the first optical transmission device through the first optical fiber or the second optical fiber.

14. The system according to claim 13, wherein the second optical transmission device comprises:
a communication unit, configured to send a communication signal;
a dummy light unit, configured to send a dummy light signal, wherein a spectrum and optical power of the dummy light signal are consistent with a spectrum and optical power of the communication signal; and
a second optical switch, configured to select the communication signal to be connected to the first optical fiber, and select the dummy light signal to be connected to the second optical fiber, wherein the first optical fiber and the second optical fiber are configured to transmit a signal to a first optical transmission device, wherein
if a fault occurs in a communication link on which the first optical fiber is located, the second optical switch switches a signal connected to the first optical fiber from the communication signal to the dummy light signal, switches a signal connected to the second optical fiber from the dummy light signal to the communication signal, and controls, during the switching, optical power variations of optical signals input to the first optical fiber and the second optical fiber to be within a fifth threshold.

15. The system according to claim 14, wherein the second optical switch comprises:
a fourth multiplexer, wherein two input ports of the fourth multiplexer are respectively connected to the communication unit and the dummy light unit, and two output ports are respectively connected to the first optical fiber and the second optical fiber, wherein
the fourth multiplexer is configured to adjust split ratios of the plurality of input ports during the switching of the optical switch, to enable the optical power variations of optical signals input to the first optical fiber and the second optical fiber to be less than or equal to the fifth threshold.

16. The system according to claim 13, wherein the second optical transmission device comprises:
a communication unit, configured to send a communication signal; and
a splitter, wherein an input port of the splitter is connected to the communication unit, and two output ports are respectively connected to the first optical fiber and the second optical fiber; and the splitter is configured to split the communication signal into a first communication signal and a second communication signal, and the first communication signal and the second communication signal are respectively transmitted through the first optical fiber and the second optical fiber.
